# EUROPEAN PATENT SPECIFICATION

(11) **EP 0 666 409 B1**
(45) Date of publication and mention of the grant of the patent: **26.05.1999**
(21) Application number: 95101509.8
(22) Date of filing: 03.02.1995
(51) Int. Cl.: F02B 31/00, F02F 1/24, F02F 1/42

(54) **Direct injection diesel engine**
Dieselmotor mit Direkteinspritzung
Moteur diesel à injection directe

(30) Priority: 04.02.1994 JP 33170/94
(43) Date of publication of application: 09.08.1995
(73) Proprietor: Mazda Motor Corporation, Aki-gun Hiroshima-ken (JP)
(72) Inventor: Yuzuhira, Yasuhiro, Hiroshima-shi, Hiroshima-ken (JP); Masuda, Shunji, Aki-gun, Hiroshima-ken (JP); Kashimoto, Masaaki, Hiroshima-shi, Hiroshima-ken (JP); Shibakawa, Manabu, Higashihiroshima-shi, Hiroshima-ken (JP)
(74) Representative: Heim, Hans-Karl, Dipl.-Ing.

(56) References cited:
- EP-A- 0 573 322
- EP-A- 0 634 571
- GB-A- 2 081 809
- JP-A-55 032 976
- US-A- 3 020 896
- US-A- 3 045 655

## Description

### BACKGROUND OF THE INVENTION

### 1. Field of the invention

The present invention relates to a diesel engine, and, more particularly, to a direct injection type of diesel engine which has a plurality of intake ports extending from one side of a cylinder head and opening into a combustion chamber, at least one exhaust port extending from another side of the cylinder head and opening into the combustion chamber, and a glow plug extending toward a recessed piston head.

### 2. Description of Related Art

In order for diesel engines to increase a volumetric efficiency, it is typical to form two intake ports in each of the cylinders. These intake port are laid out so as to produce a unidirectional swirling, respectively, for the purpose of an improvement of combustibility. In this type of diesel engine having two intake ports for each cylinder which are usually configured so that either one has a helical throat (which is hereafter referred to as a helical intake port) and the other has a straight throat in parallel to a tangent to the cylinder (which is hereafter referred to as a straight tangential intake port), while the helical port is helpful in increasing a swirling ratio of fuel-mixture, nevertheless, it provides a decline in volumetric efficiency due to large intake air resistance. In the recent years, because, by virtu of an improvement of fuel injection system, the combustibility of this type of diesel engine is ensured even with a low swirling ratio, it is a strong tendency to pursue a high volumetric efficiency preferably with low swirling ratios.

Various efforts have been made to define the configuration of intake ports in order for the diesel engine to provide a high volumetric efficiency. One such effort is that described in Japanese Unexamined Utility Model Publication No. 62 - 144. The approach used was to form two straight tangential intake port for each cylinder so as to produce a desired swirling ratio. These two intake ports are laid out such that an opening of either one of the two intake ports which is located after where a swirling is produced is in proximity to a horizontal center line of the cylinder perpendicular to a plane including a vertical axis of the cylinder closer than an opening of the other and that a center line passing through centers of the two openings extends at a certain angle relative to the horizontal center line. The cylinder is also formed with two exhaust ports arranged in what is called a staggered fashion in which a center line of two openings of the exhaust ports is in parallel with the center line of the two openings of the intake ports.

EP-A-0 634 571 discloses an intake apparatus of a Diesel engine with a plurality of intake ports provided in each of the cylinders. A glow plug is arranged between two downstream throats of the intake ports. Therefore, this arrangement is principally different from the arrangement according to the invention.

US-A-3,020,896, EP-A-0 573 322 and GB-A-2 081 809, do not refer to specific arrangements of a glow plug.

US-A-3,045,655 and JP-A-55-32976 do not refer to specific arrangements of a glow plug either. These documents disclose specific arrangements of intake and exhaust ports in an internal combustion engine. Therefore, they are not relevant concerning the main part of the present invention. The statement "the arrangement of a glow plug known per se" is not founded. Obviously neither of the cited documents shows the arrangement of intake and exhaus ports, glow plug, combustion chamber and cylinder head according to the invention.

In Japanese Unexamined Utility Model Publication No. 63 - 156424, a gasoline engine is provided which has a main port for introducing air only and a supplementary port for introducing an air-fuel mixture, both of which are of the straight type producing unidirectional a swirling. These main and supplementary ports are laid out such that a glow plug extends toward an position between the main port and an exhaust port from one side of a cylinder head remote from the main port.

In an attempt to enable a glow plug to get into a concavity or recess of a piston crown or head which forms a single combustion chamber for each cylinder together with a lower wall of the cylinder head of a direct injection type of diesel engine which have two intake valves for each cylinder or, in particular, have two intake valves and two exhaust valves for each cylinder and which deliver fuel directly into the combustion chamber so as thereby to improve starting performance of the engine, the selection of shapes of the two intake ports, namely helical and/or tangential, and the location of the glow plug relative to the intake and exhaust ports is a matter of great concern with respect to the degree of freedom in laying out the glow plug relative to these intake and exhaust ports, the intensity of swirling, thermal damage of the glow plug and the like.

In the design of, for instance, a four valve, direct injection diesel engine, one approach to glow plug layouts is to direct the glow plug vertically toward the notch of the piston head. However, since the vertical arrangement must make use of a long glow plug extending above the cylinder head without any positional interference with a valve drive system above the cylinder head, it is structurally impractical.

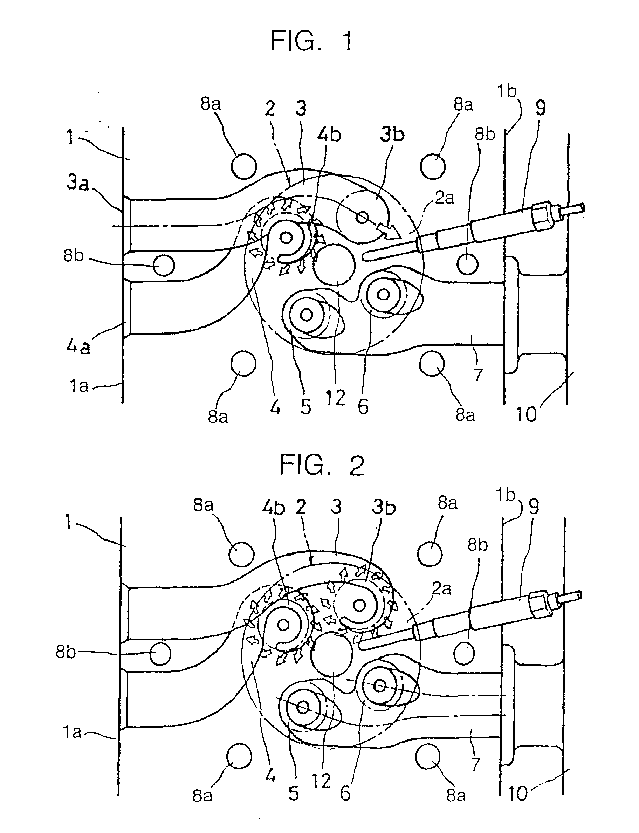

Another approach is to direct the glow plug obliquely from the flank of the cylinder head. In this oblique arrangement, the glow plug may extend from the cylinder flank remote from either one of the intake ports, or otherwise from the cylinder flank near the intake port.In any oblique arrangement, because at least one of the intake ports, namely a rear intake port, is ordinarily required to have a helical nose, various constraints are imposed upon the oblique arrangements, which will be described hereafter with reference to Figures 1 - 4.

Figure 1 shows schematically a prior art oblique arrangement in which a glow plug 9 extends obliquely toward the center of a combustion chamber 2a from the flank of a cylinder head 1 remote from intake ports of each cylinder 2. One of these intake ports, namely a front intake port 3, is straight and tangential, and the other, namely a rear intake port 4, is helical. The front intake port 3 has an upstream end 3a at one of the flanks la of the cylinder head 1 and a downstream end 3b opening into the combustion chamber 2a. Similarly, the rear intake port 4 has an upstream end 4a at the flank la of the cylinder head 1 and a downstream end 4b opening into the combustion chamber 2a. Further, the cylinder head 1 has two exhaust ports, namely a front exhaust port 5 and a rear exhaust port 6, for each cylinder. These front and rear exhaust ports open into combustion chamber 2a and join together as a single exhaust port 7 extending to another flank 1b of the cylinder head 1 and opening into an exhaust manifold 10. A fuel injector 12 is located approximately at a center of the combustion chamber 2a. The glow plug 9 extends obliquely from the flank 1b of the cylinder head 1 where the exhaust port 7 opens. The cylinder head 1 is formed with several bosses, such as main bolt bosses 8a and extra bolt bosses 8b distributed as shown in Figure 1.

In this oblique arrangement, since the glow plug 9 is in close proximity to the exhaust manifold 10 and interferes with an intake air flow introduced through the front intake port 3, it suffers heat and has an influence on a swirling.

Figure 2 shows schematically another prior art oblique arrangement in which a glow plug 9 extends obliquely toward the center of a combustion chamber 2a from the flank of a cylinder head 1 remote from front and rear intake ports of each cylinder 2, both of which are helical. The front intake port 3 has an upstream end 3a at one of the flanks la of the cylinder head 1 and a downstream end 3b opening into the combustion chamber 2a. Similarly, the rear intake port 4 has an upstream end 4a at the flank la of the cylinder head 1 and a downstream end 4b opening into the combustion chamber 2a. Further, the cylinder head 1 has two exhaust ports, namely a front exhaust port 5 and a rear exhaust port 6, for each cylinder. These front and rear exhaust ports open into combustion chamber 2a and join together as a single exhaust port 7 extending to another flank 1b of the cylinder head 1 and opening into an exhaust manifold 10. A fuel injector 12 is located approximately at a center of the combustion chamber 2a, and a glow plug 9 extends obliquely toward the combustion chamber 2a from the flank 1b of the cylinder head 1 where the exhaust port 7 opens. The cylinder head 1 is formed with several bosses, such as main bolt bosses 8a and extra bolt bosses 8b distributed as shown in Figure 2.

In this oblique arrangement, since the glow plug 9 is in close proximity to the exhaust manifold 10 and interferes with an intake air flow introduced through the front intake port 3, it suffers heat damage and has an adverse influence on a part of swirling.

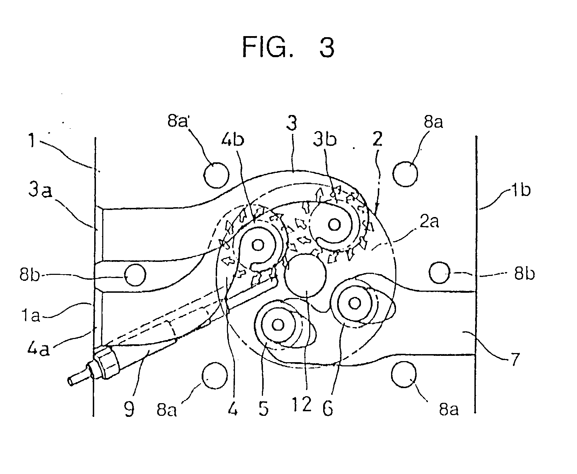

Figure 3 shows schematically still another prior art oblique arrangement in which a glow plug 9 extends obliquely toward the center of a combustion chamber 2a from the flank of a cylinder head 1 where the front and rear intake ports of each cylinder 2 open, both of which are helical. The front intake port 3 has an upstream end 3a at one of the flanks la of the cylinder head 1 and a downstream end 3b opening into the combustion chamber 2a. Similarly, the rear intake port 4 has an upstream end 4a at the flank la of the cylinder head 1 and a downstream end 4b opening into the combustion chamber 2a. In addition, the cylinder head 1 has two exhaust ports, namely a front exhaust port 5 and a rear exhaust port 6, for each cylinder. These front and rear exhaust ports open into combustion chamber 2a and join together as a single exhaust port 7 extending to another flank 1b of the cylinder head 1 and opening into an exhaust manifold 10. A fuel injector 12 is located approximately at a center of the combustion chamber 2a, and a glow plug 9 extends obliquely toward the combustion chamber 2a from the flank 1a of the cylinder head 1 where the intake ports 3,4 open. The cylinder head 1 is formed with several bosses, such as main bolt bosses 8a and extra bolt bosses 8b.

This arrangement causes a reduction in the degree of freedom of laying out a glow plug, which is usually low due to possible positional interference between the rear intake port 4 and the glow plug 9 and renders the glow plug 9 to be influential in providing a uniform intake air flow around the entire opening 4b of the rear intake port 4a as well.

It was thought, though unusual, to install a glow plug in a direct injection diesel engine of what is called a double tangential type having two straight and tangential intake ports for each cylinder. In such an arrangement, the glow plug has a different influence on the degree of freedom in glow plug layout, the strength of swirling, heat damage and the like. One such arrangement takes advantage of a layout of an ignition plug described in Japanese Unexamined Utility Model Publication No. 63 - 156424, if a glow plug is installed so as to extend obliquely into a combustion chamber from the exhaust side of a double tangential, direct injection type of diesel engine, it is in close proximity to an exhaust manifold and, consequently, experiences the same influence of heat as that of a direct injection diesel engine of the type having a front tangential intake port and a rear helical intake port. In addition, it is apparent that the glow plug of the double tangential direct injection type of diesel engine has also an influence on an air flow introduced through the front tangential intake port. It was possibly thought that a glow plug may be otherwise laid out so as to extend obliquely into the combustion chamber from the intake side of the double tangential direct injection diesel engine. Such an arrangement, however, includes various unsolved problems and, accordingly, is only speculative and unclear in terms of practical result.

### SUMMARY OF THE INVENTION

It is an object of the present invention to provide a direct injection diesel engine having a plurality of intake ports which provides a compact arrangement of a glow plug.

It is another object of the invention to provide a direct injection diesel engine having a plurality of intake ports which secures the degree of freedom in glow plug layout without getting a glow plug to suffer heat damage and have an adverse influence on a swirling.

Much attention has been given to various arrangements of glow plugs relative to intake ports and, as a result, it was proved that an expedient arrangement includes at least a rear intake port of a cylinder head formed in a tangential fashion and a glow plug installed into the cylinder head from a side of the cylinder head where intake ports open and that, while this arrangement still imposes a restraint on an angle at which the rear intake port opens into a combustion chamber, it yields high degrees of freedom in laying out the glow plug. Owing to this arrangement, it is facilitated that the glow plug is suitably situated without having any influence on a flow of intake air introduced through any intake port and, consequently, prevented from suffering heat damage and being elongated.

In keeping with the teaching of the present invention, there is provided in a direct injection type of diesel engine having a cylinder head which is formed, for one cylinder, with a plurality of intake ports extending downward from one side of the cylinder head and opening into a combustion chamber on one side of a transverse center line of the cylinder spatially intersecting perpendicularly a center line of rotation of a crankshaft and at least one exhaust port extending from another side of the cylinder head and opening into the combustion chamber on another side of the transverse center line, and is provided, for one cylinder, with a glow plug directed toward a concavity formed in a piston head. At least one front intake port is formed so as to have an approximately straight throat which extends in a plane perpendicular to a vertical center line of the cylinder and in parallel with a tangent to the cylinder and opens into the combustion chamber at upper reach of a swirling to be produced in the combustion chamber and at least one rear intake port is formed so as to have a throat opens into the combustion chamber at lower reach of the swirling. The glow plug is installed so as to extend downward from the one side of the cylinder head toward between the rear intake port and the exhaust port. One end of the rear intake port at which the rear intake port opens into the combustion chamber is desirably located in proximity to the transverse center line closer than one end of the front intake port at which the front intake port opens into the combustion chamber.

According to a preferred embodiment of the invention, the glow plug is located so as to extend below and overlap in position at least partly with the rear intake port, and another end of the rear intake port is located higher in a vertical position than another end of the front intake port. In this instance, the glow plug can be installed in what is called a dead space provided below an upstream part of the rear intake port.

According to another embodiment of the invention in which the direct injection diesel engine is of a double tangential type that has the front and rear intake ports, each of which has an approximately straight throat extending in a plane perpendicular to the vertical center line of the cylinder and in parallel with a tangent to the cylinder, the glow plug is located so as to extend below and overlap in position at least partly with the rear intake port, and another end of the rear intake port is located higher in a vertical position than another end of the front intake port. In this instance, the glow plug can be installed in what is called a dead space provided below an upstream part of the rear intake port. Further, the other end of the rear intake port is desirably located so as to have an ejection angle at which an air-fuel mixture is ejected into the combustion chamber larger than the front intake port.

With the direct injection diesel engine of the invention, the glow plug is laid out with a high degree of freedom so that it is located at a long distance far from the exhaust port and free from positional interference with the intake ports, thereby, on one hand, preventing intake air introduced into the combustion chamber through the intake ports from interference with the glow plug and, consequently, being helpful for a certain swirling and, on the other hand, keeping the glow plug free from heat damage due to exhaust gases and having no adverse influence on a flow of coolant in a water jacket at the side of the cylinder head where the exhaust port opens. Owing, in particular, to the rear intake port having a straight and tangential throat, the rear intake port imposes on the glow plug positional restraint necessary to avoid interference therebetween less than a helical type of rear intake ports and is more cooperative to increase the volumetric efficiency- of the diesel engine and produce a certain swirling. Furthermore, directing the front and rear intake ports so that the rear intake port ejects an air-fuel mixture into the combustion chamber at an angle larger than the front intake port forces a main stream of intake air from the rear intake port to be directed downward as compared to a main stream of intake air from the rear intake port and permits a rear intake valve to operate with a decreased moment of axial inertia, so that a swirling is less spread during passing the rear intake valve. This results in less interference between intake air flows introduced through the front and rear intake ports and lessen a skirmish of an intake air flow from the rear intake port against a front intake valve, providing an enhanced swirling and an increase in volumetric efficiency.

### BRIEF DESCRIPTION OF THE DRAWINGS

The above and other objects and features of the present invention will be clearly understood from the following description with respect to a preferred embodiment thereof when considered in conjunction with the accompanying drawings, in which the same reference numerals have been used to denote the same or similar parts or elements throughout the drawings and in which:
Figure 1 is a schematic illustration showing an example of a cylinder head of a prior art direct injection diesel engine;
Figure 2 is a schematic illustration showing an example of a cylinder head of another prior art direct injection diesel engine;
Figure 3 is a schematic illustration showing an example of a cylinder head of another prior art direct injection diesel engine;
Figure 4 is a schematic illustration showing a cylinder head of a direct injection diesel engine in accordance with a preferred embodiment of the present invention as viewed from the top;
Figure 5 is a schematic illustration showing the cylinder head of Figure 4 as viewed from the front;
Figure 6 is a plan view of a part of the cylinder head of the direct injection diesel engine of Figure 4; and
Figure 7 is a side view of the part of the cylinder head of Figure 6.

### DETAILED DESCRIPTION OF THE PREFERRED EMBODIMENTS

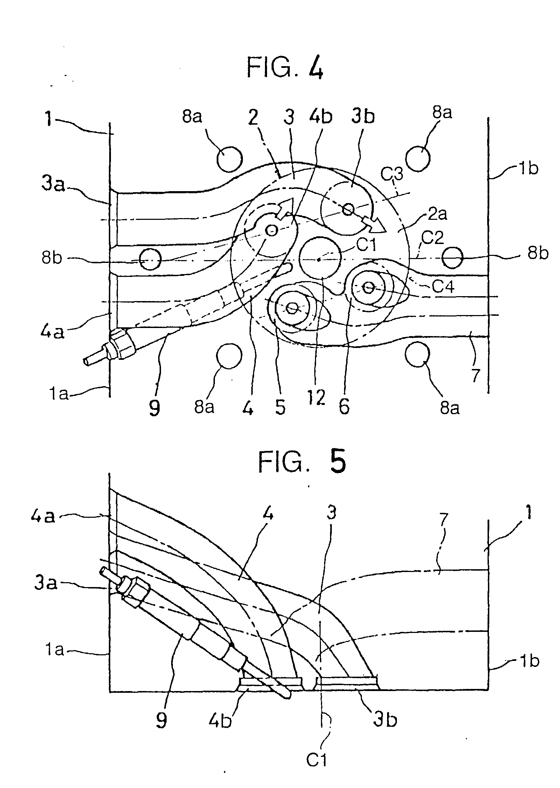

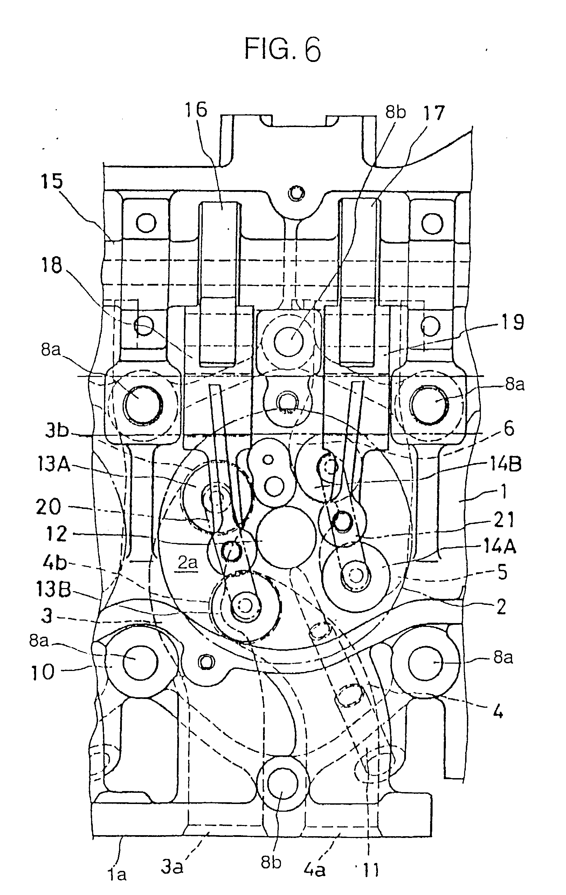

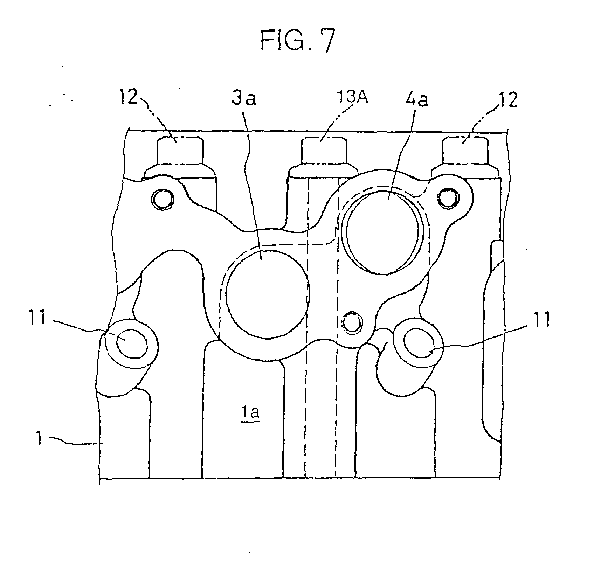

Referring now to the drawings in detail, and in particular, to Figures 4 - 7, a cylinder head 1 of, for instance, an in-line, multi-cylinder type of direct injection diesel engine has a plurality of cylinder bores 2 (only one of which is shown). Each cylinder head 1 is formed with a combustion chamber 2a between a piston head (not shown) and a lower wall of the cylinder head 1. The cylinder head 1 has two intake ports, namely a front intake port 3 and a rear intake port 4, both of which are of straight and tangential type. The front intake port 3 has an upstream end 3a at one of the flanks la of the cylinder head 1 and a downstream end 3b opening into the combustion chamber 2a at upper stream of a swirling. Similarly, the rear intake port 4 has an upstream end 4a at the flank la of the cylinder head 1 and a downstream end 4b opening into the combustion chamber 2a at lower reach of the swirling. Further, the cylinder head 1 has two exhaust ports, namely a front exhaust port 5 and a rear exhaust port 6, for each cylinder. These front and rear exhaust ports 5 and 6 open into combustion chamber 2a and join together as a single exhaust port 7 extending to another flank 1b of the cylinder head 1. A fuel injector 12 is located approximately at a center of the combustion chamber 2a. A glow plug 9 is inserted into the cylinder head 1 through a bore 11 (see Figures 6 and 7) extending below the rear intake port 4 and obliquely downward from the flank la of the cylinder head 1 where the intake ports 3 and 4 open toward where the downstream end 4a of the rear intake port 4 terminates and opens into the combustion chamber 2a. This glow plug 9 is positioned so as to direct its tip end toward a notch of the piston head. The cylinder head 1 is formed with a number of bosses for bolt holes, namely main bolt bosses 8a in two rows on both sides of a row of cylinder bores 2 and extra bolt boss 8b in two rows on both sides of the cylinder row. In other words, four main bolt bosses 8a are arranged around each cylinder bore 2 at regular angular separations and at an equal distance from the center of the cylinder bore 2 so that each two main bolt bosses 8a are aligned in the transverse direction of the cylinder head 1 between each adjacent cylinder bores 2. Each extra bolt boss 8b is offset outside from the main bolt bosses 8a in the transverse direction and positioned between each two main bolt bosses 8a in the lengthwise direction. Further, each two extra bolt bosses 8b are on a transverse center line C2 of the cylinder bore 2 and at an equal distance from each main bolt bosses 8a.

As was described above, the front and rear intake ports 3 and 4 are of the straight tangential type having a straight throat extending in parallel with a tangential line to the cylinder bore 2 in a plane perpendicular to a vertical center line C1 of the cylinder bore 2 and arranged in what is called a staggered fashion in which a center line C4 of two openings of the exhaust ports is basically in parallel with the center line C3 of the two openings of the intake ports. That is, these front and rear intake ports 3 and 4 are arranged such that the downstream end 4b of the rear intake port 4 is located in proximity closer to the transverse center line C2 of the cylinder bore 2 which spatially intersects a center line of rotation of a crankshaft (not shown) of the engine at a right angle than the downstream end 3b of the front intake port 3 and that the center line C3 passing through centers of the respective downstream ends 3b and 4b of the front and rear intake ports 3 and 4 intersects the transverse center line C2 at a certain angle. Further, the front and rear intake ports 3 and 4 are arranged such that the upstream end 4a of the rear intake port 4 is located higher in the vertical direction than the upstream end 3a of the front intake port 3. In addition, the rear intake port 4 has an ejection angle at which it ejects an air-fuel mixture into the combustion chamber 2a larger than the front intake port 3. The rear intake port 4 may, if desirable, have the ejection angle smaller than, or otherwise equal to, the front intake port 3.

On the other hand, the exhaust ports 5 and 6 are arranged such that the center line C4 passing through the centers of the respective upstream ends of the front and rear exhaust ports 5 and 6 is approximately in parallel with the center line C3 passing the centers of the respective downstream ends 3b and 4b of the front and rear intake ports 3 and 4.

As shown in Figure 6, the cylinder head 1 is provided with two intake valves 13A and 13B by which the intake ports 3 and 4 of each cylinder 2 are opened and shut at a predetermined timing, respectively. Similarly, the cylinder head 1 is provided with two exhaust valves 14A and 14B by which the exhaust ports 5 and 6 are opened and shut at a predetermined timing, respectively. These valves 13A, 13B, 14A and 14B are driven by a single overhead camshaft type of valve drive system. This valve drive system includes a camshaft 15, disposed above the cylinder head 1, rocker arms 18 and 19 for the intake valves 13A and 13B and the exhaust valves 14A and 14B, respectively. The camshaft 15 is integrally formed with an intake valve cam 16 for the intake valves 13A and 13B of each cylinder 2 and an exhaust valve cam 17 for the exhaust valves 14A and 14B of the cylinder. Each two intake valves 13A and 13B for each cylinder 2 are mechanically connected by a cross head 20, respectively. Similarly, each two exhaust valves 14A or 14B for each cylinder 2 are mechanically connected by a cross head 21, respectively. The camshaft 15 opens and closes coincidentally the intake valves 13A and 13B of each cylinder 2 at a predetermined timing. Similarly, it opens and closes coincidentally the exhaust valves 14A and 14B of each cylinder 2 at a predetermined timing.

With the direct injection diesel engine with the glow plug 9 directed, obliquely in vertical direction, from the side of the cylinder head 1 remote from the exhaust port 7, i.e. where the intake ports 3 and 4 open, toward between the rear tangential intake port 4 and the front exhaust port 5, the glow plug 9 does not suffer heat damage and have no influence on a flow of coolant in a water jacket (not shown) at the side of the cylinder head 1 to which the exhaust port 7 extends, nor impede even partly flows of intake air introduced through the intake ports 3 and 4. Consequently, the engine not only produces certainly a swirling but also provides an increased efficiency of cooling and an improvement of reliable operation of the glow plug 9. Further, the arrangement in which the glow plug 9 extends below the rear intake port 4 does not need a large space for these intake ports 3 and 4 and glow plug 9, resulting in a compact configuration of the engine. In addition, incorporating the oblique arrangement of glow plug 9 in the double tangential direct injection diesel engine improves space efficiency and volumetric efficiency of the cylinder head 1 and enhances a strong swirling produced in the combustion chamber 2a of the cylinder 2. The arrangement of the rear intake port 4 at an ejection angle larger than the front intake port 3 improves volumetric efficiency of the cylinder head 1 and has an enhanced effect on a swirling produced in the combustion chamber 2a of the cylinder 2.

It is to be understood that the cylinder head 1 may be formed with a front intake port 3 configured in a helical fashion, and that the intake and exhaust ports may be arranged in a parallel fashion in which both the center lines C3 of the two openings of the intake ports and the center lines C4 of two openings of the exhaust ports are in parallel with the transverse center line C3 of the cylinder 2. Furthermore, the direct injection diesel engine according to the present invention may be of a type having a plurality of intake port more than two for each cylinder and at least one exhaust port.

## Claims

1. A direct injection type of diesel engine having a cylinder head (1) which is formed, for each cylinder, with a plurality of intake ports (3, 4) extending downward from one side of the cylinder head (1) and opening into a combustion chamber (2a) on one side of a transverse center line (C2) of the cylinder (2) spatially intersecting perpendicularly a center line of rotation of a crankshaft and at least one exhaust port (5) extending from another side of the cylinder head (1) and opening into the combustion chamber (2a) on another side of the transverse center line (C2), said cylinderhead (1) being provided, for each cylinder (2), with a glow plug (9) directed toward a concavity of a piston head, at least one of said intake ports (3) having an approximately straight throat which extends in a plane perpendicular to a vertical center line (C1) of said cylinder (2) and in parallel with a tangent to said cylinder (2) and opens into said combustion chamber (2a) at an upper reach of a swirling to be produced in said combustion chamber (2a); at least another one of said intake ports (4) having a throat which opens into said combustion chamber (2a) at a lower reach of said swirling,
**characterized** by
said glow plug (9) extending downward from said one side of said cylinder head (1) toward between said other one of said intake ports (4) and said exhaust port (5).

2. A direct injection type of diesel engine as defined in claim 1, wherein said
one of said intake ports (4) opens into said cylinder (2) at a point nearer to said transverse center line (C2) than said other one of said intake ports (3).

3. A direct injection type of diesel engine as defined in claim 2,
**characterized** by
said glow plug (9) extending so that an extension line of said glow plug (9) intersects said transverse center line (C2) at an angle.

4. A direct injection type of diesel engine as defined in claim 2,
**characterized** by
said glow plug (9) extending below and overlapping at least partly with said one of said intake ports (4).

5. A direct injection type of diesel engine as defined in claim 2, wherein
said one of said intake ports (4) opens onto said one side of said cylinder head (1) at a vertical position higher than said other one of said intake ports (3).

6. A direct injection type of diesel engine as defined in claim 5, wherein
said glow plug (9) extends from a point on said one side of said cylinder head (1) in a position lower than the position at which said one of said intake ports (4) opens onto said one side of said cylinder head (1).

7. A direct injection type of diesel engine as defined in claim 2,
**characterized** by
said throat of said other one of said intake ports (3) being approximately straight and extending in a plane perpendicular to said vertical center line (C1) of said cylinder (2) and in parallel with a tangent to said cylinder (2).

8. A direct injection type of diesel engine as defined in claim 7, wherein
said one of said intake ports (4) opens onto said one side of said cylinder head (1) at a vertical position higher than said other one of said intake ports (3) and having an ejection angle at which an air-fuel mixture is ejected into said combustion chamber (2a) larger than said other one of said intake ports (3).

9. A direct injection type of diesel engine as defined in claim 8,
**characterized** by
said glow plug (9) extending below and overlapping at least partly with said one of said intake ports (4).

## Patentansprüche

1. Ein Dieselmotor vom Direkteinspritztyp mit einem Zylinderkopf (1), welcher für jeden Zylinder mit einer Vielzahl von Einlaßöffnungen (3, 4), die sich abwärts von einer Seite des Zylinderkopfs (1) erstrecken und sich in eine Verbrennungskammer (2a) auf einer Seite der Quermittellinie (C2) des Zylinders (2) öffnen, die sich räumlich senkrecht mit einer Drehmittellinie einer Kurbelwelle schneidet, und mit mindestens einer Auslaßöffnung (5) ausgebildet ist, die sich von einer anderen Seite des Zylinderkopfs (1) erstreckt und sich in die Verbrennungskammer (2a) auf einer anderen Seite der Quermittellinie (C2) öffnet, wobei der Zylinderkopf (1) für jeden Zylinder (2), mit einer Glühkerze (9) versehen ist, die in Richtung einer Hohlrundung eines Kolbenkopfes gerichtet ist, wobei wenigstens eine der Einlaßöffnungen (3) einen annähernd geraden Hals hat, welcher sich in eine Ebene senkrecht zu einer vertikalen Mittellinie (C1) des Zylinders (2) und parallel mit einer Tangente zu dem Zylinder (2) erstreckt und sich in die Verbrennungskammer (2a) bei einer oberen Reichweite einer in der Verbrennungskammer (2a) zu erzeugenden Verwirbelung öffnet; wobei wenigstens eine weitere der Einlaßöffnungen (4) einen Hals aufweist, welcher sich in die Verbrennungskammer (2a) bei einer geringeren Reichweite der Verwirbelung öffnet,
**dadurch gekennzeichnet**, daß sich die Glühkerze (9) abwärts von der einen Seite des Zylinderkopfs (1) in Richtung zwischen der weiteren der Einlaßöffnungen (4) und der Auslaßöffnung (5) erstreckt.

2. Ein Dieselmotor vom Direkteinspritztyp gemäß Anspruch 1, wobei sich die eine der Einlaßöffnungen (4) in den Zylinder (2) an einem Punkt öffnet, der näher der Quermittellinie ist (C2) als die der weiteren der Einlaßöfnnungen (3).

3. Ein Dieselmotor vom Direkteinspritztyp gemäß Anspruch 2, **dadurch gekennzeichnet**, daß sich die Glühkerze (9) derart erstreckt, daß eine Verlängerungslinie der Glühkerze sich mit der Quermittellinie (C2) in einem Winkel schneidet.

4. Ein Dieselmotor vom Direkteinspritztyp gemäß Anspruch 2, **dadurch gekennzeichnet**, daß sich die Glühkerze unterhalb und wenigstens teilweise überlappend mit der einen der Einlaßöffnungen (4) erstreckt.

5. Ein Dieselmotor vom Direkteinspritztyp gemäß Anspruch 2, wobei sich die eine der Einlaßöffnungen (4) auf eine Seite des Zylinderkopfes (1) in einer vertikalen Position öffnet, die höher ist als die der weiteren der Einlaßöffnungen.

6. Ein Dieselmotor vom Direkteinspritztyp gemäß Anspruch 5, wobei sich die Glühkerze (9) von einem Punkt auf einer Seite des Zylinderkopfs (1) in eine niedrigere Position erstreckt, als die Position, in welcher sich die eine der Einlaßöffnungen (4) auf die andere Seite des Zylinderkopfs (1) öffnet.

7. Ein Dieselmotor vom Direkteinspritztyp gemäß Anspruch 2, **dadurch gekennzeichnet**, daß der Hals der weiteren der Einlaßöffnungen (3) annähernd gerade ist und sich in eine Ebene senkrecht zu der vertikalen Mittellinie (C1) des Zylinders (2) und parallel mit einer Tangente zu dem Zylinder (2) erstreckt.

8. Ein Dieselmotor vom Direkteinspritztyp gemäß Anspruch 7, wobei sich die eine der Einlaßöffnungen (4) auf eine Seite des Zylinderkopfes (1) in einer vertikalen Position öffnet, die höher ist, als die der weiteren der Einlaßöffnungen (3) und einen Einspritzwinkel aufweist, bei welchem ein Luft-Treibstoff-Gemisch in die Verbrennungskammer (2a) eingespritzt wird, welcher größer ist als der der weiteren der Einlaßöffnungen (3).

9. Ein Dieselmotor vom Direkteinspritztyp gemäß Anspruch 8, **dadurch gekennzeichnet**, daß sich die Glühkerze (9) unterhalb und wenigstens teilweise überlappend mit der einen der Einlaßöffnungen (4) erstreckt.

## Revendications

1. Moteur diesel du type à injection directe, comprenant une culasse (1) qui comporte, pour chaque cylindre, une pluralité d'orifices d'admission (3, 4) s'étendant vers le bas depuis un premier côté de la culasse (1) et débouchant dans une chambre de combustion (2a) sur un premier côté de l'axe transversal (C2) du cylindre (2) coupant de façon spatiale perpendiculairement l'axe de rotation d'un vilebrequin, et au moins un orifice d'échappement (5) s'étendant depuis un autre côté de la culasse (1) et débouchant dans la chambre de combustion (2a) sur l'autre côté de l'axe transversal (C2), ladite culasse (1) étant pourvue, pour chaque cylindre (2), d'une bougie de préchauffage (9) dirigée vers une concavité d'une tête de piston, au moins un premier des orifices d'admission (3) comportant un col à peu près rectiligne qui s'étend dans un plan perpendiculaire à l'axe vertical (C1) dudit cylindre (2) et parallèlement à une tangente audit cylindre (2) et débouche dans ladite chambre de combustion (2a) en un point de portée supérieur d'un tourbillon devant être produit dans ladite chambre de combustion (2a); au moins un autre desdits orifices d'admission (4) comportant un col qui débouche dans ladite chambre de combustion (2a) en un point de portée inférieur dudit tourbillon,
caractérisé en ce que ladite bougie de préchauffage (9) s'étend vers le bas depuis ledit premier côté de ladite culasse (1) en direction d'un endroit compris entre ledit autre des orifices d'admission (4) et ledit orifice d'échappement (5).

2. Moteur diesel du type à injection directe selon la revendication 1, dans lequel ledit premier desdits orifices d'admission (4) débouche dans ledit cylindre (2) en un point situé plus près dudit axe transversal (C2) que celui où débouche ledit autre desdits orifices d'admission (3).

3. Moteur diesel du type à injection directe selon la revendication 2, caractérisé en ce que ladite bougie de préchauffage (9) s'étend de manière qu'une ligne de prolongement de ladite bougie de préchauffage (9) coupe ledit axe transversal (C2) suivant un angle.

4. Moteur diesel du type à injection directe selon la revendication 2, caractérisé en ce que ladite bougie de préchauffage (9) s'étend en dessous dudit premier desdits orifices d'admission (4) et se trouve au moins partiellement en recouvrement avec ledit premier desdits orifices d'admission (4).

5. Moteur diesel du type à injection directe selon la revendication 2, dans lequel ledit premier desdits orifices d'admission (4) débouche sur ledit premier côté de ladite culasse (1) à un endroit vertical plus haut que celui où débouche ledit autre desdits orifices d'admission (3).

6. Moteur diesel du type à injection directe selon la revendication 5, dans lequel ladite bougie de préchauffage (9) s'étend depuis un point situé sur ledit premier côté de ladite culasse (1) à un endroit plus bas que l'endroit où ledit premier desdits orifice d'admission (4) débouche sur ledit premier côté de ladite culasse (1).

7. Moteur diesel du type à injection directe selon la revendication 2, caractérisé en ce que ledit col dudit autre desdits orifices d'admission (3) est à peu près rectiligne et s'étend dans un plan perpendiculaire audit axe vertical (C1) dudit cylindre (2) et en parallèle avec une tangente audit cylindre (2).

8. Moteur diesel du type à injection directe selon la revendication 7, dans lequel ledit premier desdits orifices d'admission (4) débouche sur ledit premier côté de ladite culasse (1) dans un endroit vertical plus haut que ledit autre desdits orifices d'admission (3) et présentant un angle d'éjection, suivant lequel un mélange air-combustible est éjecté dans ladite chambre de combustion (2a), plus grand que celui dudit autre desdits orifices d'admission (3).

9. Moteur diesel du type à injection directe selon la revendication 8, caractérisé en ce que ladite bougie de préchauffage (9) s'étend en dessous dudit premier desdits orifices d'admission (4) et en recouvrement au moins partiellement avec ledit premier desdits orifices d'admission.
